# EUROPÄISCHE PATENTSCHRIFT

(11) **EP 2 113 966 B1**
(45) Veröffentlichungstag und Bekanntmachung des Hinweises auf die Patenterteilung: **16.03.2016**
(21) Anmeldenummer: 09100205.5
(22) Anmeldetag: 27.03.2009
(51) Int. Cl.: G01S 13/42, H01Q 3/26, H01Q 25/00, H01Q 19/06

(54) **Mehrstrahlradarsensor**
Multiple ray radar sensor
Capteur radar à plusieurs rayons

(30) Priorität: 30.04.2008 DE 102008001467
(43) Veröffentlichungstag der Anmeldung: 04.11.2009
(73) Patentinhaber: Robert Bosch GmbH, 70442 Stuttgart (DE)
(72) Erfinder: Binzer, Thomas, 70565 Stuttgart (DE)

(56) Entgegenhaltungen:
- WO-A-2009/015945
- DE-A1- 4 128 995
- DE-A1- 19 648 203
- US-B1- 6 590 544

## Beschreibung

### Stand der Technik

Die Erfindung betrifft einen Mehrstrahlradarsensor mit mehreren nebeneinander angeordneten Antennenelementen, einer in Abstand vor den Antennenelementen angeordneten Sammellinse und einer zusätzlichen Vorfokussierungslinse

Insbesondere befaßt sich die Erfindung mit einem winkelauflösenden Radarsensor für den Einsatz in Kraftfahrzeugen, beispielsweise zur Ortung von vorausfahrenden Fahrzeugen im Zusammenhang mit einer automatischen Abstandsregelung.

Die von den mehreren nebeneinander angeordneten Antennenelementen gesendete und/oder empfangene Radarstrahlung passiert die allen Antennenelementen gemeinsame Sammellinse und wird dadurch gebündelt. Aufgrund des Versatzes der einzelnen Antennenelemente in seitlicher Richtung sind jedoch auch die von ihnen erzeugten und/oder empfangenen Radarstrahlen (Beams) etwas gegeneinander winkelversetzt. Wenn ein reflektierendes Radarobjekt von mehreren Beams getroffen wird, läßt sich dann anhand der Amplituden- und/oder Phasenbeziehung zwischen den von den verschiedenen Antennenelementen empfangenen Signalen der Azimutwinkel des Radarobjekts bestimmen oder zumindest abschätzen.

Die Sendecharakteristik eines solchen Mehrstrahlradarsensors ist von der Geometrie der einzelnen Antennenelemente und den optischen Eigenschaften der Sammellinse abhängig, wird jedoch auch durch Interferenzeffekte zwischen den von den verschiedenen Antennenelementen emittierten Signalen beeinflußt.

Aus DE 197 55 607 ist ein Radarsensor der eingangs genannten Art bekannt, bei dem eine Vorfokussierungslinse relativ nahe vor dem Antennenelement oder den Antennenelementen angeordnet ist. Diese Vorfokussierungslinse ist so dimensioniert, daß sie von der gesamten Radarstrahlung durchstrahlt wird, die auch durch die eigentliche Sammellinse hindurchgeht. Die Vorfokussierungslinse hat den Zweck, einen kompakteren Aufbau des Radarsensors zu ermöglichen.

DE 10 2007 036262 A1 zeigt einen Radarsensor, bei dem zwei plankonvexe Zylinderlinsen deckungsgleiche Grundflächen haben und mit ihren planen Oberflächen aneinander anliegen.

Es ist auch bereits vorgeschlagen worden, bei einem Mehrstrahlradarsensor an der planen Innenseite der plankonvexen Sammellinse eine Zylinderlinse anzubringen, durch die in der Elevation eine stärkere Bündelung als im Azimut erreicht wird.

### Offenbarung der Erfindung

Aufgabe der Erfindung ist es, einen Mehrstrahlradarsensor mit verbessertem Winkeldetektionsvermögen zu schaffen.

Diese Aufgabe wird erfindungsgemäß dadurch gelöst, daß bei einem Mehrstrahlradarsensor der eingangs genannten Art die Vorfokussierungslinse so angeordnet ist, daß ein von ihr aufgespannter Winkelbereich kleiner ist als ein vonder Sammellinse aufgespannter Winkelbereich und vollständig innerhalb des Winkelbereiches liegt, der von der Sammellinse aufgespannt wird, so daß die Vorfokussierungslinse (22) nur einen Teil der von den Antennenelementen gesendeten und/oder empfangenen und durch die Sammellinse hindurchgehenden Radarstrahlung beeinflußt.

Die Vorfokussierungslinse bewirkt insbesondere, daß ein Teil der Strahlen, die von den vier Antennenelementen ausgehen, fokussiert werden, bevor sie auf die Hauptlinse treffen. Dadurch ändert sich die Aperturbelegung hinter der Linse so, daß sich im Azimutdiagramm ein breiteres Hauptmaximum ergibt und somit die Genauigkeit der Bestimmung des Azimutwinkels verbessert wird. Bei einem herkömmlichen Radarsensor gleicher Bauart, jedoch ohne Vorfokussierungslinse, hat das Hauptmaximum im Azimutdiagramm nur eine Breite von etwa 20° (Nullstellen bei ± 10°), so daß sich bei Azimutwinkeln in der Nähe von ± 10° eine größere Varianz und damit eine geringere Genauigkeit bei der Winkelschätzung ergibt. Bei dem erfindungsgemäßen Radarsensor sind dagegen die ersten Nullstellen deutlich weiter nach außen, also zu höheren Winkeln verschoben, so dass eine Bestimmung des Azimutwinkels mit signifikant niedrigerer Varianz ermöglicht wird.

Vorteilhafte Ausgestaltungen der Erfindung sind in den Unteransprüchen angegeben.

Die Vorfokussierungslinse kann vorteilhaft unmittelbar an der Innenfläche der Sammellinse, beispielsweise einer plankonvexen Linse, angeordnet sein. Dies erlaubt eine einfache und kostengünstige Herstellung.

Da für die Winkelmessung im wesentlichen nur das Azimutdiagramm des Radarsensors maßgeblich ist, kann die Vorfokussierungslinse als vertikal orientierte Zylinderlinse ausgebildet sein.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Figur 1: einen schematischen Grundriss eines erfindungsgemäßen Radarsensors;
- Figur 2: den Radarsensor nach Figur 1 in einer schematischen Seitenansicht;
- Figur 3: ein Azimut-Sendediagramm des erfindungsgemäßen Radarsensors;
- Figur 4: ein Elevations-Sendediagramm des Radarsensors; und
- Figur 5: ein Azimut-Empfangsdiagramm für einen der Beams des Radarsensors nach Figur 1.

### Ausführungsformen der Erfindung

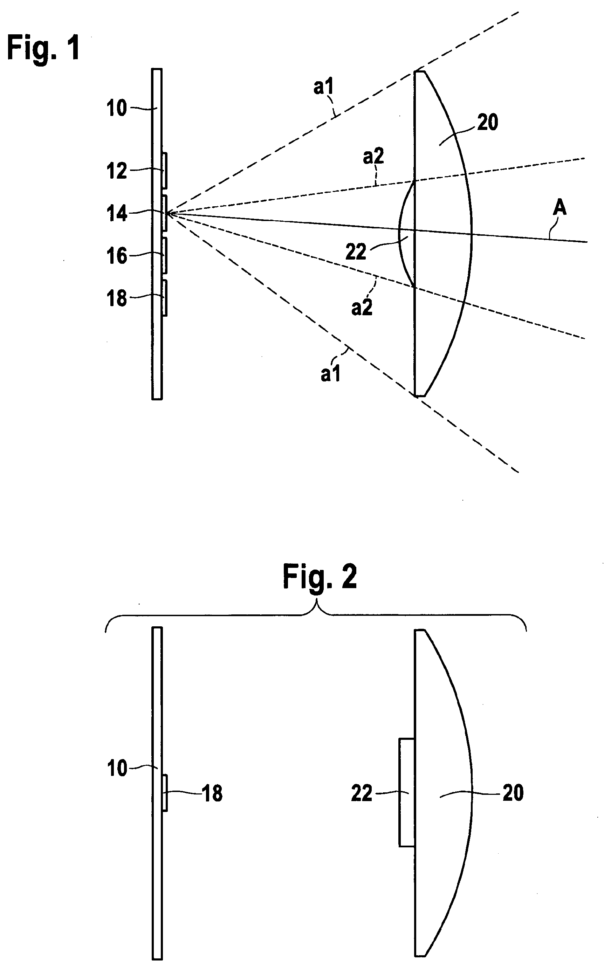

Der in Figur 1 gezeigte Radarsensor weist vier auf einer gemeinsamen Platine 10 angeordneten Antennenelemente (Patches) 12, 14, 16, 18 auf. In Abstand zu der Platine 10 ist eine für Radarstrahlung brechende Sammellinse 20 angeordnet, beispielsweise eine aplanatische plankonvexe Linse, deren plane Seite der Platine 10 zugewandt ist. Die von allen vier Antennenelementen emittierte Strahlung geht durch die Sammellinse 20 hindurch und wird durch diese gebündelt.

Bei dem hier als Beispiel betrachteten Radarsensor ist ein monostatisches Antennenkonzept verwirklicht, d. h., jedes der Antennenelemente 12 dient sowohl als Sendeantenne wie auch als Empfangsantenne. Folglich wird auch die von einem Radarsensor reflektierte Strahlung, die von einem bestimmten Antennenelement emittiert wurde, durch die Sammellinse 20 wieder auf das betreffende Antennenelement fokussiert und dort empfangen.

Da die Antennenelemente 12, 14, 16, 18 in der Horizontalen-gleichmäßig gegeneinander versetzt sind, sind ihre Hauptabstrahl- und Empfindlichkeitsrichtungen gegeneinander winkelversetzt. In Figur 1 ist als Beispiel die Hauptabstrahl- und Empfindlichkeitsrichtung des Antennenelements 14 durch eine Gerade A angegeben, die durch das Antennenelement 14 und durch die Mitte der Sammellinse 20 hindurchgeht. Man erkennt, dass die Gerade A mit der optischen Achse der Sammellinse 20 einen gewissen Winkel bildet. Entsprechendes gilt auch für die anderen Antennenelemente.

Für das Antennenelement 14 ist außerdem durch zwei Geraden a1 der Winkelbereich markiert, der durch die Sammellinse 20 aufgespannt wird. Die in diesen Winkelbereich emittierte Strahlung passiert folglich die Sammellinse 20 und wird durch diese gebündelt.

An der planen Innenseite der Sammellinse 20 ist eine plankonvexe Vorfokussierungslinse (Zylinderlinse) 22 angebracht oder in einem Stück mit der Sammellinse 20 ausgebildet. Diese Vorfokussierungslinse 22 ist vertikal orientiert, so dass man in der Draufsicht in Figur 1 ihr Profil sieht. Die Breite der Zylinderlinse 22 ist deutlich kleiner als der Durchmesser der Sammellinse 20, insbesondere kleiner als die Hälfte dieses Durchmessers. Für das Antennenelement 14 wird mit den Linien a2 ein Winkelbereich markiert, der durch die Vorfokussierungslinse 22 aufgespannt wird. Dieser Winkelbereich ist deutlich kleiner und liegt vollständig innerhalb des Winkelbereiches, der durch die Sammellinse 20 aufgespannt wird. Folglich geht nur ein Teil der von den Antennenelementen 12 - 18 emittierten Radarstrahlung durch die Zylinderlinse 22 hindurch, während ein anderer Teil dieser Radarstrahlung über die Bereiche der Sammellinse 20 außerhalb der Zylinderlinse 22 passiert und somit durch die Zylinderlinse nicht beeinflusst wird.

Wie Fig. 2 zeigt, ist auch die Höhe der Vorfokussierungslinse 22 in der Vertikalen deutlich kleiner als der Durchmesser der Sammellinse 20, insbesondere kleiner als die Hälfte dieses Durchmessers.

Die Vorfokussierungslinse 22 bewirkt für jedes der Antennenelemente 12 bis 18, jeweils für den zentralen Winkelbereich a2, eine Vorfokussierung der Radarstrahlen.

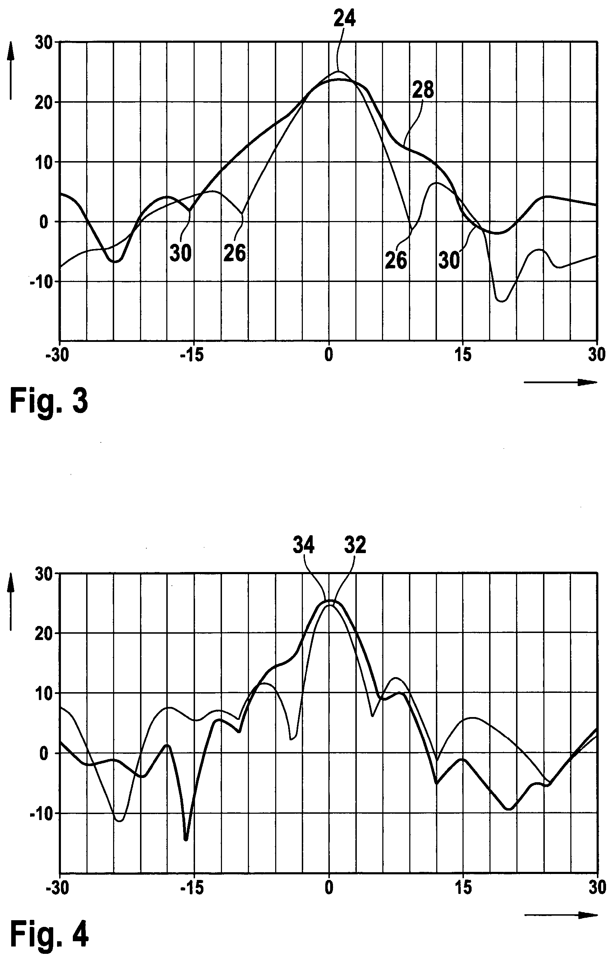

Die azimutale Winkelverteilung der von allen vier Antennenelementen gemeinsam emittierten Radarstrahlung, das sogenannte Azimutdiagramm, wird durch Interferenz zwischen den Signalen beeinflusst, die von den einzelnen Antennenelementen emittiert werden. Figur 3 illustriert, in welcher Weise die Vorfokussierungslinse 22 das Azimut-Sendediagramm verändert.

Die in Fig. 3 in dünneren Linien eingezeichnete Kurve 24 gibt die azimutale Winkelverteilung des Sendegewinns aller vier Antennenelemente gemeinsam für den Fall an dass keine Vorfokussierungslinse vorhanden ist. Aufgrund der Interferenz zwischen den verschiedenen Antennenelementen ergibt sich nur ein relativ schmales Hauptmaximum, das durch Nullstellen 26 bei etwa ±10° begrenzt wird. Das hat zur Folge, dass man für Objekte bei einem Azimutwinkel in der Nähe von ±10° nur ein relativ schwaches Signal erhält, wodurch eine genaue Bestimmung des Azimutwinkels erschwert wird.

Die als fettere Linie eingezeichnete Kurve 28 in Fig. 3 gibt dagegen die Winkelverteilung des Sendegewinns für den Radarsensor nach Fig. 1 an, der zusätzlich zu der Sammellinse 20 auch die Vorfokussierungslinse 22 aufweist. Man erkennt, dass hier das Hauptmaximum deutlich verbreitert ist und die ersten Nullstellen 30 erst bei etwa ±15° auftreten. Folglich sind genauere Winkelmessungen in einem größeren Winkelbereich möglich.

Da die Vorfokussierungslinse 22 im gezeigten Beispiel eine Zylinderlinse ist, wirkt sie sich vorwiegend auf das Azimut-Sendediagramm aus und weniger auf das Elevations-Sendediagramm, das in Fig. 4 gezeigt ist. Auch hier repräsentiert die als dünne Linie eingezeichnete Kurve 32 den Radarsensor ohne Vorfokussierungslinse, und die Kurve 34 den Radarsensor mit Vorfokussierungslinse.

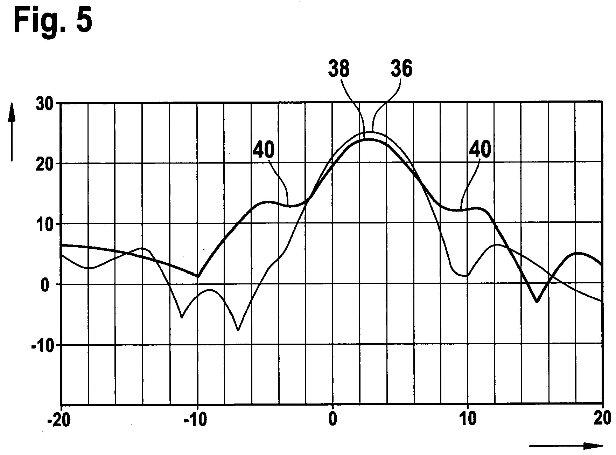

In Figur 5 ist für ein einzelnes Antennenelement, nämlich das Antennenelement 14 in Figur 1, das Empfangsdiagramm dargestellt. Die Kurve 36 zeigt das Empfangsdiagramm für den Radarsensor ohne Vorfokussierungslinse und die Kurve 38 das Diagramm für den Sensor mit der Vorfokussierungslinse 22. Auch hier erkennt man, dass in dem Diagramm mit Vorfokussierungslinse die ersten Nebenminima 40 weniger ausgeprägt sind als bei dem Diagramm ohne Vorfokussierung und dass die ersten Nullstellen deutlich weiter von der Hauptempfindlichkeitsrichtung entfernt liegen.

## Patentansprüche

1. Mehrstrahlradarsensor mit mehreren nebeneinander angeordneten Antennenelementen (12, 14, 16, 18), einer in Abstand vor den Antennenelementen angeordneten Sammellinse (20) und einer zusätzlichen Vorfokussierungslinse (22), **dadurch gekennzeichnet, daß** die Vorfokussierungslinse (22) so angeordnet ist, daß ein von ihr aufgespannter Winkelbereich (a2) kleiner ist als ein von der Sammellinse (20) aufgespannter Winkelbereich (a1) und vollständig innerhalb des Winkelbereiches (a1) liegt, der von der Sammellinse (20) aufgespannt wird, so daß die Vorfokussierungslinse (22) nur einen Teil der von den Antennenelementen (12 - 18) gesendeten und/oder empfangenen und durch die Sammellinse (20) hindurchgehenden Radarstrahlung beeinflußt,.

2. Mehrstrahlradarsensor nach Anspruch 1, **dadurch gekennzeichnet, daß** die Vorfokussierungslinse (22) unmittelbar an der Sammellinse (20) angebracht ist.

3. Mehrstrahlradarsensor nach Anspruch 1 oder 2, **dadurch gekennzeichnet, daß** die Sammellinse (20) eine plankonvexe Linse ist, deren plane Seite den Antennenelementen (12 - 18) zugekehrt ist, und daß die Vorfokussierungslinse (22) an dieser planen Seite angebracht ist.

4. Mehrstrahlradarsensor nach einem der vorstehenden Ansprüche, **dadurch gekennzeichnet, daß** die Vorfokussierungslinse (22) eine vertikal orientierte Zylinderlinse ist.

5. Mehrstrahlradarsensor nach einem der vorstehenden Ansprüche, **dadurch gekennzeichnet, daß** die Breite der Vorfokussierungslinse (22) weniger als die Hälfte des Durchmessers der Sammellinse (20) beträgt.

6. Mehrstrahlradarsensor nach den Ansprüchen 4 und 5, **dadurch gekennzeichnet, daß** die Höhe der Vorfokussierungslinse (22) weniger als die Hälfte des Durchmessers der Sammellinse (20) beträgt.

## Claims

1. Multi-beam radar sensor comprising a plurality of antenna elements (12, 14, 16, 18) arranged next to one another, a converging lens (20) arranged at a distance in front of the antenna elements and an additional pre-focusing lens (22), **characterized in that** the pre-focusing lens (22) is arranged in such a way that an angular range (a2) spanned thereby is smaller than an angular range (a1) spanned by the converging lens (20) and lies completely within the angular range (a1) spanned by the converging lens (20) such that the pre-focusing lens (22) only influences part of the radar radiation that is transmitted and/or received by the antenna elements (12-18) and has passed through the converging lens (20).

2. Multi-beam radar sensor according to Claim 1, **characterized in that** the pre-focusing lens (22) is attached directly to the converging lens (20).

3. Multi-beam radar sensor according to Claim 1 or 2, **characterized in that** the converging lens (20) is a plano-convex lens, the planar side of which faces the antenna elements (12-18), and **in that** the pre-focusing lens (22) is attached to this planar side.

4. Multi-beam radar sensor according to one of the preceding claims, **characterized in that** the pre-focusing lens (22) is a vertically oriented cylindrical lens.

5. Multi-beam radar sensor according to one of the preceding claims, **characterized in that** the width of the pre-focusing lens (22) is less than half the diameter of the converging lens (20).

6. Multi-beam radar sensor according to Claims 4 and 5, **characterized in that** the height of the pre-focusing lens (22) is less than half the diameter of the converging lens (20).

## Revendications

1. Détecteur radar multifaisceau comprenant plusieurs éléments d'antenne (12, 14, 16, 18) disposés les uns à côté des autres, une lentille de convergence (20) disposée à un écart donné des éléments d'antenne et une lentille de préfocalisation (22) supplémentaire, **caractérisé en ce que** la lentille de préfocalisation (22) est disposée de telle sorte qu'une plage angulaire (a2) qu'elle couvre est plus petite qu'une plage angulaire (a1) couverte par la lentille de convergence (20) et se trouve entièrement à l'intérieur de la plage angulaire (a1), qui est couverte par la lentille de convergence (20), de sorte que la lentille de préfocalisation (22) n'influence qu'une partie du rayonnement radar émis et/ou reçu par les éléments d'antenne (12 à 18) et traversant la lentille de convergence (20).

2. Détecteur radar multifaisceau selon la revendication 1, **caractérisé en ce que** la lentille de préfocalisation (22) est montée directement sur la lentille de convergence (20).

3. Détecteur radar multifaisceau selon la revendication 1 ou 2, **caractérisé en ce que** la lentille de convergence (20) est une lentille plan-convexe dont le côté plan est tourné vers les éléments d'antenne (12 à 18), et **en ce que** la lentille de préfocalisation (22) est montée sur ce côté plan.

4. Détecteur radar multifaisceau selon l'une des revendications précédentes, **caractérisé en ce que** la lentille de préfocalisation (22) est une lentille cylindrique orientée verticalement.

5. Détecteur radar multifaisceau selon l'une des revendications précédentes, **caractérisé en ce que** la largeur de la lentille de préfocalisation (22) est inférieure à la moitié du diamètre de la lentille de convergence (20).

6. Détecteur radar multifaisceau selon l'une des revendications 4 et 5, **caractérisé en ce que** la hauteur de la lentille de préfocalisation (22) est inférieure à la moitié du diamètre de la lentille de convergence (20) .
